# EUROPÄISCHE PATENTANMELDUNG

(11) **EP 4 667 242 A1**
(43) Veröffentlichungstag der Anmeldung: **24.12.2025**
(21) Anmeldenummer: 25176251.4
(22) Anmeldetag: 14.05.2025
(51) Int. Cl.: B60C 19/00, B60C 19/12, B60C 15/00

(54) **FAHRZEUGREIFEN**

(30) Priorität: 19.06.2024 DE 102024205686
(71) Anmelder: Continental Reifen Deutschland GmbH, 30175 Hannover (DE)
(72) Erfinder: Sterdas, Jozef, 020 01 Púchov (SK); Durovec, Juraj, 020 01 Púchov (SK)
(74) Vertreter: Continental Corporation

(57) **Zusammenfassung**

Fahrzeugreifen (1), der um eine Rotationsachse (Rx) entlang einer Umlaufrichtung (UR) rotierbar ist, aufweisend einen Laufstreifen (10), der sich gleichgerichtet zur Rotationsachse (Rx) erstreckt, einen Seitenstreifen (20), der sich entlang einer radialen Richtung (RR), die senkrecht zur Rotationsachse (Rx) verläuft, von einem Innenumfang (21) des Fahrzeugreifens (1) zu einem Außenumfang (22) des Fahrzeugreifens (1) erstreckt, einen Reifenwulst (40), der sich entlang der Umlaufrichtung (UR) erstreckt und mittels des Seitenstreifens (20) mit dem Laufstreifen (10) verbunden ist. Der Reifenwulst weist einen Wulstverstärker (41), eine Wulstfüllung (42) und einen Wulstkern (43) auf. Der Fahrzeugreifen weist weiterhin einen Farbstreifen (50) auf, der am Reifenwulst (40) angeordnet ist und in einem nicht montierten Zustand des Fahrzeugreifens (1) sichtbar ist, wobei der Farbstreifen (50) Informationen über einen Fahrzeugreifentyp des Fahrzeugreifens (1) umfasst.

## Beschreibung

Die vorliegende Offenbarung betrifft einen Fahrzeugreifen. Die vorliegende Offenbarung betrifft weiterhin ein Verfahren zur Herstellung eines Fahrzeugreifens.

Die Nachfrage nach wiederverwertbaren Produkten nimmt stetig zu. So auch im Bereich von Fahrzeugen und insbesondere im Bereich Fahrzeugreifen. Ein Fahrzeugreifen, der auch als Kraftfahrzeugreifen, Luftreifen oder Reifen bezeichnet werden kann, weist einen Laufstreifen und einen Reifenwulst auf. Bei dem Laufstreifen handelt es sich um eine äußere, umlaufende Fläche mit der der Fahrzeugreifen auf einem Untergrund abrollen kann. Der Reifen ist über einen Reifewulst auf einer Felge befestigbar.

Es ist wünschenswert, einen Fahrzeugreifen anzugeben, dessen Zusammensetzung und Beschaffenheit dauerhaft direkt und unmittelbar erkennbar ist. Es ist zudem wünschenswert, ein Verfahren zur Herstellung eines solchen Fahrzeugreifens anzugeben, das verlässlich und effizient durchführbar ist.

Ausführungsformen der vorliegenden Offenbarung betreffen einen Fahrzeugreifen. Weitere Ausführungsformen der Offenbarung betreffen ein Verfahren zum Herstellen eines solchen Fahrzeugreifens.

Vorteile, Merkmale und Ausgestaltungen der Vorrichtung gelten auch für das Verfahren und umgekehrt.

Reifenkennzeichen befinden sich bei Fahrzeugreifen im Allgemeinen im Seitenbereich des Fahrzeugreifens und dienen in erster Linie der Verbraucherinformation. Eine Reifenkennzeichnung umfasst unter anderem den Geschwindigkeitsindex, die Marke, die Reifengröße und das Herstellungsdatum (DOT-Nummer). Andere Kennzeichen weisen auf den Hersteller hin. Kennzeichen im Seitenbereich unterliegen in der Regel keiner Abnutzung, sodass diese über die gesamte Lebensdauer eines Fahrzeugreifens für den Verbraucher sichtbar sind. Diese Kennzeichen sind auch im montierten Zustand des Fahrzeugreifens an einer Felge sichtbar.

Der Fahrzeugreifen ist um eine Rotationsachse entlang einer Umlaufrichtung rotierbar. Der Fahrzeugreifen weist einen Laufstreifen auf. Der Laufstreifen erstreckt sich in die gleiche Richtung wie die Rotationsachse. Der Laufstreifen erstreckt sich dementsprechend gleichgerichtet zur Rotationsachse. Die Ausdehnung des Laufstreifens entlang der Rotationsachse entspricht im Wesentlichen der Reifenbreite.

Der Fahrzeugreifen weist einen Seitenstreifen auf. Der Seitenstreifen erstreckt sich entlang einer radialen Richtung. Die radiale Richtung verläuft senkrecht zur Rotationsachse. Die radiale Richtung verläuft insbesondere von einem Innenumfang des Fahrzeugreifens zu einem Außenumfang des Fahrzeugreifens. Der Innenumfang stellt den Teil des Fahrzeugreifens dar, der geeignet ist in einem montierten Zustand des Fahrzeugreifens mit einer Felge in Kontakt zu gelangen. Der Außenumfang des Fahrzeugreifens stellt den Teil des Fahrzeugreifens dar, der durch die Lauffläche gebildet wird. Die Ausdehnung des Seitenstreifens entlang einer radialen Richtung entspricht im Wesentlichen der Reifenhöhe.

Der Fahrzeugreifen weist weiterhin einen Reifenwulst auf, der sich entlang der Umlaufrichtung erstreckt. Der Reifenwulst ist mittels des Seitenstreifens mit dem Laufstreifen verbunden. Der Reifenwulst bildet die Verbindung vom Fahrzeugreifen zur Felge. Der Fahrzeugreifen weist zwei Seitenstreifen auf, die jeweils auf einer lateralen Seite des Fahrzeugreifens angeordnet sind. Die beiden lateralen Seiten des Fahrzeugreifens erstrecken sich entlang der radialen Richtung und werden durch die Rotationsachse verbunden. Die beiden lateralen Seiten weisen eine flächige Ausdehnung auf. Der Laufstreifen verbindet die beiden lateralen Seiten entlang ihres jeweiligen Umfangs, der sich entlang der Umlaufrichtung erstreckt. Der Fahrzeugreifen weist weiterhin zwei Reifenwülste auf, die ebenfalls jeweils auf einer der lateralen Seiten des Fahrzeugreifens angeordnet sind. Der Reifenwulst weist einen Wulstverstärker, eine Wulstfüllung und einen Wulstkern auf.

Der Wulstverstärker weist beispielsweise Nylon und/oder Aramid und/oder eine starke, hitzebeständige Kunstfaser auf. Der Wulstverstärker sorgt für Fahrstabilität und ermöglicht ein präzises Lenkverhalten.

Die Wulstfüllung weist einen stabilisierenden Keil aus synthetischem Kautschuk auf, der dieselben Aufgaben wie der Wulstverstärker erfüllt und zudem den Einfederungskomfort entscheidend beeinflusst.

Der Wulstkern weist in Kautschuk eingebetteten Stahldraht auf. Der Stahlkern gewährleistet den festen Sitz des Fahrzeugreifens auf der Felge.

Der Fahrzeugreifen weist weiterhin einen Farbstreifen auf. Der Farbstreifen ist am Reifenwulst angeordnet. Der Farbstreifen verläuft durchgängig entlang der Umlaufrichtung des Fahrzeugreifens. Der Farbstreifen ist ringförmig ausgebildet, wenn der Fahrzeugreifen entlang der Rotationsachse betrachtet wird. Alternativ ist der Farbstreifen zumindest abschnittsweise am Reifenwulst angeordnet. Der Farbstreifen ist beispielsweise als unterbrochener Ring ausgeformt, der nicht durchgängig entlang der Umlaufrichtung verläuft. Der Farbstreifen ist in einem nicht montierten Zustand des Fahrzeugreifens an der Felge sichtbar. Der Farbstreifen umfasst Informationen über einen Fahrzeugreifentyp des Fahrzeugreifens.

Der Farbstreifen ist beispielsweise als eine Schicht ausgebildet, die auf dem Wulstverstärker aufgetragen ist. Alternativ oder zusätzlich ist der Farbstreifen mit dem Wulstverstärker integriert. Auf diese Weise wird die Abriebfestigkeit des Farbstreifens erhöht, so dass auch nach längerem Gebrauch des Fahrzeugreifens der Farbstreifen im nicht montierten Zustand sichtbar bleibt.

Ein Fahrzeugreifentyp ist beispielsweise ein Standardreifen für einen Personenkraftwagen oder ein Nutzfahrzeug. Ein weiterer Fahrzeugreifentyp ist beispielsweise ein selbstdichtender Reifen oder ein geräuschunterdrückender Reifen. Der Farbstreifen weist abhängig vom Fahrzeugreifentyp eine unterschiedliche Farbe auf. Zum Beispiel weist ein selbstdichtender Reifen einen gelben Farbstreifen auf und ein geräuschunterdrückender Reifen weist einen blauen Farbstreifen auf. Die Farben des Farbstreifens sind nicht beschränkt auf die genannten Farben und können jeden Farbton annehmen. Vorteilhafterweise ist die gewählte Farbe gut erkennbar und von anderen Farben unterscheidbar ausgebildet, so dass eine einfache Identifizierung des Fahrzeugreifentyps ermöglicht wird. Somit ist eine Farbcodierung möglich, um die Fahrzeugreifen zu klassifizieren.

Der Farbstreifen ermöglicht es auf einfache Weise verschiedene Fahrzeugreifentyp zu unterscheiden ohne auf technische Hilfsmittel, wie beispielsweise RFID-Scanner, zurückgreifen zu müssen. Die unterschiedlichen Fahrzeugreifen sind mit bloßem Auge erkennbar, wodurch eine teure Anschaffung von zusätzlicher Ausrüstung zum Identifizieren vermieden wird. Dies ist besonders vorteilhaft bei der Reifensortierung in Recyclinganlagen. Mit dem Farbstreifen können Spezialreifen, wie selbstdichtende Reifen und geräuschunterdrückende Reifen von klassischen Standardreifen unterschieden werden. Die Spezialreifen sind wegen der verwendeten Materialien, wie beispielsweise Dichtmaterialien, besonders schwierig zu recyclen. Dementsprechend ermöglicht der Farbstreifen auf einfache Weise diese Spezialreifen zu unterscheiden.

Der Farbstreifen ist nicht zwangsweise auf nur einen Streifen beschränkt. Denkbar sind auch zwei oder drei oder mehr Streifen. Diese werden verwendet, um genauere Angaben zu den Reifeneigenschaften zu machen, ohne dass Buchstaben, Zahlen oder andere Schriftzeichen verwendet werden müssen. Dies ermöglicht eine schnellere und einfachere Identifizierung der Materialeigenschaften und des Fahrzeugreifentyps.

Ein weiterer Vorteil ist, dass der Farbstreifen bei unsachgemäßer Montage sichtbar wird, beispielsweise wenn der Fahrzeugreifen nicht richtig auf der Felge sitzt.

Gemäß einer Ausführungsform weist der Farbstreifen eine Farbe auf, die für das menschliche Auge sichtbar ist. Auf diese Weise kann der Farbstreifen ohne weiter Hilfsmittel erkannt werden und ermöglicht eine sofortige Identifizierung des Fahrzeugreifens.

Gemäß einer Ausführungsform ist der Farbstreifen auf dem Innenumfang angeordnet. Der Farbstreifen erstreckt sich in die gleiche Richtung wie die Rotationsachse. Der Farbstreifen erstreckt sich dementsprechend gleichgerichtet zur Rotationsachse.

Der Farbstreifen am Innenumfang unterliegt keiner Abnutzung, sodass dieser über die gesamte Lebensdauer eines Fahrzeugreifens sichtbar bleibt. Ein Abtragen des Farbstreifens wird verhindert oder zumindest vermindert, so dass der Farbstreifen auch nach dem Lebenszyklus des Fahrzeugreifens erkennbar bleibt.

Gemäß einer Ausführungsform ist der Farbstreifen am Wulstverstärker angeordnet. Der Farbstreifen erstreckt sich entlang der radialen Richtung.

Der Farbstreifen am Wulstverstärker unterliegt keiner Abnutzung, sodass dieser über die gesamte Lebensdauer eines Fahrzeugreifens sichtbar bleibt. Ein Abtragen des Farbstreifens wird verhindert oder zumindest vermindert, so dass der Farbstreifen auch nach dem Lebenszyklus des Fahrzeugreifens erkennbar bleibt.

Gemäß einer Ausführungsform ist der Farbstreifen im montierten Zustand des Fahrzeugreifens so positioniert, dass er an einer Felge zwischen der Felge und dem Fahrzeugreifen angeordnet ist. Der montierte Zustand des Fahrzeugreifens entspricht dem Zustand nach dem Aufziehen des Fahrzeugreifens auf die Felge. Der Farbstreifen ist im montierten Zustand so positioniert, dass er nicht sichtbar ist. Während der Farbstreifen im nicht montierten Zustand sichtbar ist, um den Fahrzeugreifentypen in einfacher Weise bestimmen zu können, wird der Farbstreifen im montierten Zustand von der Felge verdeckt. Der verdeckte Farbstreifen ist nach der Montage nicht mehr sichtbar und trägt zu einem neutralen Eindruck des Fahrzeugreifens bei. Auf diese Weise bleibt die ästhetische Anmutung des Fahrzeugreifens erhalten.

Gemäß einer Ausführungsform ist der Farbstreifen auf beiden lateralen Seiten des Fahrzeugs, die sich entlang der radialen Richtung erstrecken, angeordnet. Die beidseitige Anordnung des Farbstreifens führt zu einer besseren Sichtbarkeit und Identifizierung des Fahrzeugreifens im nicht montierten Zustand. Dies ist insbesondere vorteilhaft, um eine schnelle Einsortierung des Fahrzeugreifens zu ermöglichen.

Gemäß Ausführungsformen ist der Fahrzeugreifen für ein Personenkraftfahrzeug und/oder ein Nutzkraftfahrzeug geeignet. Der Farbstreifen kann bei jeder Art von Fahrzeugreifen angewendet werden und ermöglicht eine eindeutige Unterscheidung verschiedener Fahrzeugreifentypen.

Gemäß Ausführungsformen ist der Fahrzeugreifen ein selbstdichtender Reifen und/oder ein geräuschunterdrückender Reifen. Insbesondere die Unterscheidung von Spezialreifen, wie selbstdichtende Reifen und geräuschunterdrückende Reifen von klassischen Standardreifen stellt ein Problem dar, das durch den Farbstreifen effizient gelöst wird. Selbstdichtende Reifen und geräuschunterdrückende Reifen werden durch ein zusätzliches Dichtmaterial hergestellt. Dieses zusätzliche Dichtmaterial liegt auf der Innenseite, die sich innerhalb des Fahrzeugreifens befindet. Die Innenseite innerhalb des Fahrzeugreifens ist die Seite des Laufstreifens, die dem Außenumfang abgewandt ist. Das Dichtmaterial wird beispielsweise auf einen bereits fertigen und betriebsbereiten Fahrzeugreifen aufgetragen, um einen selbstdichtenden Reifen und/oder einen geräuschunterdrückenden Reifen herzustellen

Ein Verfahren zur Herstellung eines Fahrzeugreifens umfasst ein Hinzufügen des Farbstreifens zeitgleich mit einem Aufbringen eines Dichtmaterials für den Fahrzeugreifen.

Die Integration in einen bereits bestehenden Prozess vereinfacht die Herstellung des Fahrzeugreifens und senkt den möglichen Mehraufwand und die zusätzlichen Herstellungskosten. Der Farbstreifen wird auf dem Fahrzeugreifen beispielsweise durch Aufsprühen oder Anstreichen des Reifenwustes mit Farbe aufgebracht. Der Farbstreifen kann auf einen bereits fertig hergestellten und betriebsbereiten Fahrzeugreifen nachträglich aufgebracht werden. Beispielsweise wird der Farbstreifen zeitgleich mit dem Aufbringen des Dichtmaterials, welches für einen selbstdichtenden Reifen oder geräuschunterdrückenden Reifen verwendet wird, aufgebracht.

Weitere Vorteile, Merkmale und Weiterbildungen ergeben sich aus den nachfolgenden, in Verbindung mit den Figuren erläuterten Beispielen. Gleiche, gleichartige und gleichwirkende Elemente können figurenübergreifend mit den gleichen Bezugszeichen versehen sein. Die Figuren und die Größenverhältnisse der in den Figuren dargestellten Elemente sind nicht als maßstäblich zu betrachten. Vielmehr können einzelne Elemente zur besseren Darstellbarkeit und/oder für eine bessere Verständlichkeit übertrieben groß und/oder dick dargestellt sein.

Es zeigen:
- Figur 1: eine schematische Darstellung eines Fahrzeugreifens gemäß einem Ausführungsbeispiel, und
- Figur 2: eine Schnittansicht eines Fahrzeugreifens gemäß einem Ausführungsbeispiel.

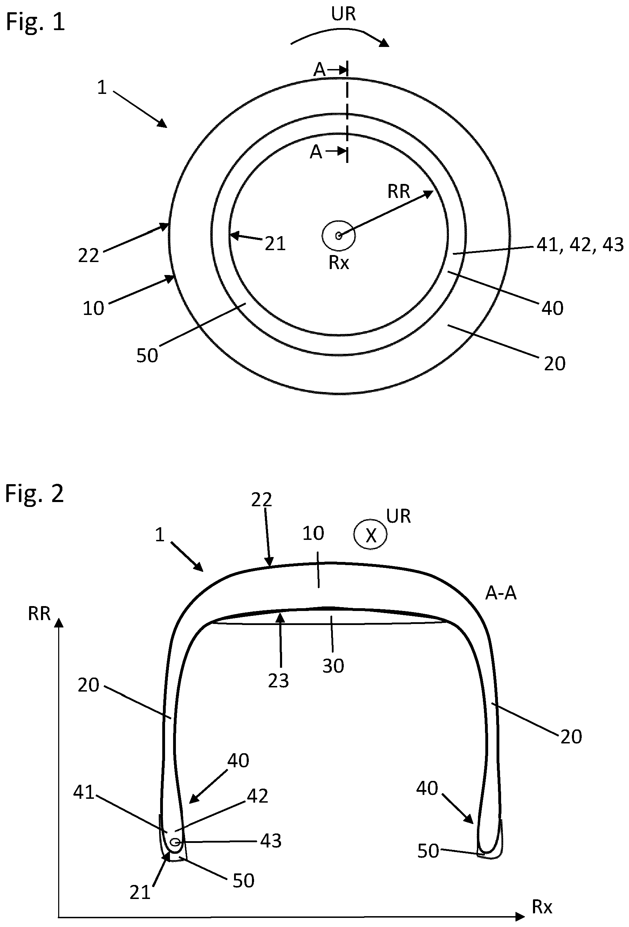

Figur 1 zeigt einen Fahrzeugreifen 1 in einer schematischen Seitenansicht. Im dargestellten Ausführungsbeispiel ist der Fahrzeugreifen 1 um eine Rotationsachse Rx entlang einer Umlaufrichtung UR rotierbar. Rotierbar bedeutet in diesem Zusammenhang, dass der Fahrzeugreifen 1 geeignet ist entlang der Umlaufrichtung UR oder entgegengesetzt der Umlaufrichtung UR zu rotieren. Die Rotationsachse Rx zeigt in die Bildebene hinein.

Der Fahrzeugreifen 1 weist einen Laufstreifen 10 auf. Bei dem Laufstreifen 10 handelt es sich um eine äußere, umlaufende Fläche mit der der Fahrzeugreifen 1 auf einem Untergrund abrollen kann. Der Laufstreifen 10 verläuft entlang der Umlaufrichtung UR und bildet insbesondere einen Außenumfang 22 des Fahrzeugreifens 1. Der Laufstreifen 1 erstreckt sich entlang der gleichen Richtung wie die Rotationsachse Rx. Der Laufstreifen 1 erstreckt sich gleichgerichtet zur Rotationsachse Rx. Die Ausdehnung des Laufstreifens 1 entlang der Rotationsachse Rx entspricht in etwa der Reifenbreite.

Der Fahrzeugreifen 1 ist über einen Reifewulst 40 auf einer Felge befestigbar. Der Reifenwulst 40 erstreckt sich entlang der Umlaufrichtung UR und bildet insbesondere einen Innenumfang 21 des Fahrzeugreifens 1. Der Innenumfang 21 stellt den Teil des Fahrzeugreifens 1 dar, der geeignet ist in einem montierten Zustand des Fahrzeugreifens 1 mit einer Felge in Kontakt zu gelangen.

Der Reifenwulst 40 weist einen Wulstverstärker 41, eine Wulstfüllung 42 und einen Wulstkern 43 auf. Der Reifenwulst 40 ist mittels eines Seitenstreifens 20 mit dem Laufstreifen 10 verbunden. Der Seitenstreifen 20 erstreckt sich entlang einer radialen Richtung RR. Die radiale Richtung RR verläuft senkrecht zur Rotationsachse Rx. Die radiale Richtung RR ist gleichgerichtet mit einer Schnittachse A-A. Dargestellt ist die Schnittachse A-A als gestrichelte Linie mit zwei Pfeilen, die die Betrachtungsrichtung angeben. Die Betrachtungsrichtung verläuft entlang der Umlaufrichtung UR.

Der Seitenstreifen 20 erstreckt sich vom Innenumfang 21 zum Außenumfang 22 und bildet eine Seitenfläche des Fahrzeugreifens 1. Die Rotationsachse Rx erstreckt sich zwischen zwei Seitenflächen des Fahrzeugreifens 1. In der Ausführungsform von Figur 1 ist eine Seitenfläche sichtbar. Die zweite Seitenfläche liegt der ersten, sichtbaren Seitenfläche entlang der Rotationsachse Rx gegenüber. Der Fahrzeugreifen 1 weist zwei Seitenstreifen 20 und zwei Reifenwülste 40 auf, die jeweils auf einer Seitenfläche des Fahrzeugreifens 1 angeordnet sind. Die Ausdehnung des Seitenstreifens 20 entlang der radialen Richtung RR entspricht in etwa der Reifenhöhe.

Der Fahrzeugreifen 1 weist weiterhin einen Farbstreifen 50 auf, der am Reifenwulst 40 angeordnet ist. In einem nicht montierten Zustand des Fahrzeugreifens 1 ist der Farbstreifen 50 sichtbar.

Der montierte Zustand des Fahrzeugreifens 1 entspricht dem Zustand nach dem Aufziehen des Fahrzeugreifens 1 auf die Felge. Der Farbstreifen 50 ist im montierten Zustand nicht sichtbar. Während der Farbstreifen 50 im nicht montierten Zustand sichtbar ist, um den Fahrzeugreifentypen in einfacher Weise bestimmen zu können, wird der Farbstreifen 50 im montierten Zustand von der Felge verdeckt. Der verdeckte Farbstreifen 50 ist nach der Montage des Fahrzeugreifens 1 nicht mehr sichtbar und trägt zu einem neutralen Eindruck des Fahrzeugreifens 1 bei. Auf diese Weise bleibt die ästhetische Anmutung des Fahrzeugreifens 1 erhalten.

Der Farbstreifen 50 umfasst Informationen über einen Fahrzeugreifentyp des Fahrzeugreifens 1. Der Farbstreifen 50 ist beispielsweise als eine Schicht ausgebildet, die auf dem Wulstverstärker 41 aufgetragen ist. Alternativ oder zusätzlich ist der Farbstreifen 50 mit dem Wulstverstärker 41 integriert. Auf diese Weise wird die Abriebsfestigkeit des Farbstreifens 50 erhöht, so dass auch nach längerem Gebrauch des Fahrzeugreifens 1 der Farbstreifen 50 im nicht montierten Zustand sichtbar bleibt.

Der Farbstreifen 50 kann jede mögliche Farbe aufweisen. Der Farbstreifen 50 weist abhängig vom Fahrzeugreifentyp eine unterschiedliche Farbe auf. Zum Beispiel weist ein selbstdichtender Reifen einen gelben Farbstreifen 50 auf und ein geräuschunterdrückender Reifen weist einen blauen Farbstreifen 50 auf. Die Farben des Farbstreifens 50 sind nicht beschränkt auf die genannten Farben und können jeden Farbton annehmen. Vorteilhafterweise ist die gewählte Farbe für das menschliche Auge gut erkennbar und von anderen Farben unterscheidbar ausgebildet, so dass eine einfache Identifizierung des Fahrzeugreifentyps ermöglicht wird. Somit ist eine Farbcodierung möglich, um den Fahrzeugreifen 1 zu klassifizieren und eine Sortierung zu vereinfachen.

Der Farbstreifen 50 verläuft durchgängig entlang der Umlaufrichtung UR des Fahrzeugreifens 1. Der Farbstreifen 50 ist ringförmig ausgebildet, wenn der Fahrzeugreifen 1 entlang der Rotationsachse Rx betrachtet wird. Alternativ ist der Farbstreifen 50 zumindest abschnittsweise am Reifenwulst 40 angeordnet und ist beispielsweise als unterbrochener Ring ausgeformt, der nicht durchgängig entlang der Umlaufrichtung UR verläuft.

Figur 2 zeigt ein Ausführungsbeispiel des Fahrzeugreifens 1 in einer schematischen Schnittansicht entlang der Schnittachse A-A aus Figur 1.

Der Fahrzeugreifen 1 weist den Laufstreifen 10, den Seitenstreifen 20 und den Reifenwulst 40 auf, wie bereits in Figur 1 beschrieben. In der Ausführungsform von Figur 2 weist der Fahrzeugreifen 1 zwei Seitenstreifen 20 und zwei Reifenwülste 40. Die Rotationsachse Rx erstreckt sich von eine der Seitenstreifen 20 zu dem anderen der beiden Seitenstreifen 20. Der Fahrzeugreifen 1 umfasst weiterhin ein Dichtmaterial 30. Das Dichtmaterial 30 liegt auf einer Innenseite 23, die sich innerhalb des Fahrzeugreifens 1 befindet. Die Innenseite 23 innerhalb des Fahrzeugreifens 1 ist die Seite des Laufstreifens 10, die dem Außenumfang 22 abgewandt ist.

Der Farbstreifen 50 ist im Ausführungsbeispiel in Figur 2 auf beiden lateralen Seiten des Fahrzeugreifens 1 angeordnet, die sich entlang der radialen Richtung RR erstrecken. angeordnet. Alternativ ist der Farbstreifen 50 nur auf einer der lateralen Seiten des Fahrzeugreifens 1 angeordnet. Der Farbstreifen 50 ist auf dem Innenumfang 21 des Fahrzeugreifens 1 angeordnet und erstreckt sich zumindest abschnittsweise in die gleiche Richtung wie die Rotationsachse Rx. Alternativ oder zusätzlich ist der Farbstreifen 50 am Wulstverstärker 41 angeordnet und erstreckt sich entlang der radialen Richtung RR. Diese Position ist besonders vorteilhaft, um den Farbstreifen 50 möglichst einfach und schnell zu erkennen und den Fahrzeugreifentypen zu identifizieren. Der Farbstreifen 50 ist im montierten Zustand des Fahrzeugreifens 1 an einer Reifenfelge 90 zwischen der Reifenfelge und dem Fahrzeugreifen 1 angeordnet. Der Farbstreifen 50 ist damit im montierten Zustand nicht sichtbar.

Als Fahrzeugreifen 1 kann jeder Fahrzeugreifen 1 verwendet werden, der geeignet für ein Personenkraftwagen und/oder ein Nutzkraftfahrzeug ist. Der Fahrzeugreifen 1 ist beispielsweise ein Standardreifen oder ein Spezialreifen, wie ein selbstdichtender Reifen und/oder ein geräuschunterdrückender Reifen.

Der Fahrzeugreifen 1 ermöglicht eine schnelle, effiziente und verlässliche Möglichkeit einen Fahrzeugreifentypen eines Fahrzeugreifens 1 zu identifizieren. Das zugehörige Verfahren zur Herstellung des Fahrzeugreifens 1 ermöglicht ein effizientes, verlässliches und kostengünstiges Herstellungsverfahren, da der Verfahrensschritt des Hinzufügens des Farbstreifens 50 in bestehende Prozesse einfach integriert werden kann.

### Bezugszeichenliste

- 1: Fahrzeugreifen
- 10: Laufstreifen
- 20: Seitenstreifen
- 21: Innenumfang
- 22: Außenumfang
- 23: Innenseite
- 30: Dichtmaterial
- 40: Reifenwulst
- 41: Wulstverstärker
- 42: Wulstfüllung
- 43: Wulstkern
- 50: Farbstreifen

- UR: Umlaufrichtung
- RR: Radiale Richtung
- Rx: Rotationsachse

## Patentansprüche

1. Fahrzeugreifen (1), der um eine Rotationsachse (Rx) entlang einer Umlaufrichtung (UR) rotierbar ist, aufweisend
- einen Laufstreifen (10), der sich gleichgerichtet zur Rotationsachse (Rx) erstreckt,
- einen Seitenstreifen (20), der sich entlang einer radialen Richtung (RR), die senkrecht zur Rotationsachse (Rx) verläuft, von einem Innenumfang (21) des Fahrzeugreifens (1) zu einem Außenumfang (22) des Fahrzeugreifens (1) erstreckt,
- einen Reifenwulst (40), der sich entlang der Umlaufrichtung (UR) erstreckt und mittels des Seitenstreifens (20) mit dem Laufstreifen (10) verbunden ist, aufweisend
- einen Wulstverstärker (41),
- eine Wulstfüllung (42) und
- einen Wulstkern (43), und
- einen Farbstreifen (50), der am Reifenwulst (40) angeordnet ist und in einem nicht montierten Zustand des Fahrzeugreifens (1) sichtbar ist, wobei der Farbstreifen (50) Informationen über einen Fahrzeugreifentyp des Fahrzeugreifens (1) umfasst.

2. Fahrzeugreifen (1) nach einem der vorhergehenden Ansprüche, wobei der Farbstreifen (50) eine Farbe aufweist, die für das menschliche Auge sichtbar ist.

3. Fahrzeugreifen (1) nach Anspruch 1, wobei der Farbstreifen (50) auf dem Innenumfang (21) angeordnet ist und sich gleichgerichtet zur Rotationsachse (Rx) erstreckt.

4. Fahrzeugreifen (1) nach Anspruch 1 oder 2, wobei der Farbstreifen (50) am Wulstverstärker (41) angeordnet ist und sich entlang der radialen Richtung (RR) erstreckt.

5. Fahrzeugreifen (1) nach einem der vorhergehenden Ansprüche, wobei der Farbstreifen (50) so positioniert ist, dass er im montierten Zustand des Fahrzeugreifens (1) an einer Reifenfelge zwischen der Reifenfelge und dem Fahrzeugreifen (1) angeordnet ist, sodass der Farbstreifen (50) nicht sichtbar ist.

6. Fahrzeugreifen (1) nach einem der vorhergehenden Ansprüche, wobei der Farbstreifen (50) auf beiden lateralen Seiten, die sich entlang der radialen Richtung (RR) erstrecken des Fahrzeugreifens (1) angeordnet ist.

7. Fahrzeugreifen (1) nach einem der vorhergehenden Ansprüche, wobei der Fahrzeugreifen (1) geeignet für ein Personenkraftwagen und/oder Nutzkraftfahrzeug ist.

8. Fahrzeugreifen (1) nach einem der vorhergehenden Ansprüche, wobei der Fahrzeugreifen (1) ein selbstdichtender Reifen ist.

9. Fahrzeugreifen (1) nach einem der vorhergehenden Ansprüche, wobei der Fahrzeugreifen (1) ein geräuschunterdrückender Reifen ist.

10. Verfahren zur Herstellung eines Fahrzeugreifens (1) nach einem der Ansprüche 1 bis 9, wobei ein Farbstreifen (50) zeitgleich mit einem Dichtmaterial (30) des Fahrzeugreifens (1) hinzugefügt wird.
